# EUROPÄISCHE PATENTSCHRIFT

(11) **EP 2 460 452 B1**
(45) Veröffentlichungstag und Bekanntmachung des Hinweises auf die Patenterteilung: **20.08.2014**
(21) Anmeldenummer: 12155489.3
(22) Anmeldetag: 07.06.2011
(51) Int. Cl.: A47J 43/08, A47J 43/07

(54) **Küchenmaschine mit einem Rührgefäß**
Kitchen appliance with a mixing container
Machine de cuisine dotée d'un récipient mélangeur

(30) Priorität: 11.06.2010 DE 102010017335
(43) Veröffentlichungstag der Anmeldung: 06.06.2012
(62) Teilanmeldung aus: 11168888.3
(73) Patentinhaber: Vorwerk & Co. Interholding GmbH, 42275 Wuppertal (DE)
(72) Erfinder: Weber, Klaus-Martin, 42109 Wuppertal (DE); Schomacher, Jutta, 42489 Wülfrath (DE)
(74) Vertreter: Müller, Enno

(56) Entgegenhaltungen:
- EP-A2- 1 923 128
- WO-A1-2008/031803
- FR-A1- 2 896 677
- US-A- 4 312 596

## Beschreibung

Die Erfindung betrifft eine Küchenmaschine mit einem Rührgefäß nach den Merkmalen des Oberbegriffes des Anspruches 1.

Küchenmaschinen der in Rede stehenden Art sind bekannt, so insbesondere in Form von elektromotorisch betriebenen Küchenmaschinen für den Haushaltsbereich, so weiter bspw. unter der Produktbezeichnung Vorwerk-Thermomix. Derartige Küchenmaschinen weisen ein bevorzugt vom Maschinengrundgehäuse abnehmbares Rührgefäß auf, in welchem Rührgefäß bevorzugt bodenseitig ein Rührwerk angeordnet ist. Letzteres ist in der Zuordnungsstellung des Rührgefäßes zu der Maschine über einen maschinenseitig vorgesehenen, mit dem Rührwerk kuppelbaren Elektromotor antreibbar. Weiter sind in diesem Zusammenhang Küchenmaschinen bekannt, bei welchen das Rührgefäß im unteren Bereich, d.h. im Bereich des Rührgefäßbodens, weiter bevorzugt im Einwirkungsbereich des Rührwerkes aufheizbar ist, dies bspw. zufolge Ausgestaltung des Rührgefäßbodens mit einer integrierten, elektrischen Widerstandsheizung. Weiter sind diesbezüglich Lösungen bekannt, bei welchen eine über die Rührgefäßwandung auf das in dem Rührgefäß befindliche Gargut einwirkende Induktionsheizung vorgesehen ist. Bevorzugt sind sowohl die Rührwerkdrehzahl als auch die Heizleistung über maschinenseitige Regler oder Taster durch den Benutzer voreinstellbar.

Aus der FR 2 896 677 A ist ein Küchengerät bekannt, welches zur Zubereitung von Fritten dienen soll. Diese Küchengerät weist ein Rührwerk auf, bei welchem der Rührarm, der in Drehrichtung vorne spitzkantig ausläuft. Er setzt unmittelbar unten an der Rührwerksachse an. Die DE 10 2007 056 711 A1 beschreibt eine Küchenmaschine mit einem Knet- und Rührwerkzeug, bei welchen die Arme auch unten an der Rührwerksachse ansetzen und vorderseitig spitz zulaufenden ausgebildet sind. Die EP 1193 128 A2 weist ein Rührwerk für eine Küchenmaschine auf, bei welchem der Rührarm unten an der Rührwerksachse ansetzt, vorderseitig spitz zulaufend ausgebildet ist und am radial äußeren Bereich einen schaufelartigen Bereich aufweist.

Ausgehend von dem dargestellten Stand der Technik beschäftigt sich die Erfindung mit der Aufgabenstellung, ein insbesondere für die Zubereitung von Fleischstücken geeignete Küchenmaschine der genannten Art anzugeben.

Diese Aufgabe ist beim Gegenstand des Anspruches 1 gelöst, wobei darauf abgestellt ist, dass das Rührwerk mit einem Hebearm versehen ist, der einen in Drehrichtung vorderen Stumpfabschnitt aufweist zum hebenden Unterfahren bspw. eines Fleischstückes und dass weiter ein Anhebeabschnitt an dem Hebearm vorgesehen ist, der sich, ausgehend von dem Stumpfabschnitt gleichmäßig, schaufelartig gegenüber der Bodenfläche anhebt und somit entsprechend endseitig einen gegenüber dem Stumpfabschnitt vergrößerten vertikalen Abstand zur Bodenfläche aufweist, dass der Hebearm einen mit der Rührwerkwelle drehfest verbundenen Vertikalabschnitt aufweist, der in Richtung der Bodenfläche gerichtet verläuft und dass der Vertikalabschnitt endseitig einen Schaufelabschnitt trägt, dessen in Drehrichtung betrachteter Randbereich den Stumpfabschnitt ausbildet.

Der Hebearm weist einen in Drehrichtung vorderen Stumpfabschnitt auf, zum hebenden Unterfahren bspw. eines Fleischstückes. Der in Drehrichtung vorgesehene Stumpfabschnitt des Hebearmes verhindert wirksam ein Zerteilen des Gargutstückes, insbesondere Fleischstückes, wobei insbesondere der Bereich des Stumpfabschnittes bevorzugt mit minimalem vertikalen Abstand zur Rührgefäßboden-Oberfläche in einer Parallelebene zur Bodenobenfläche bewegt wird, um so insbesondere auf dem bevorzugt beheizten Rührgefäßboden aufliegende Gargutstücke wie Fleischstücke zu unterfahren und anzuheben, wozu weiter bevorzugt in Drehrichtung hinter dem Stumpfabschnitt ein Anhebeabschnitt vorgesehen ist. Der Hebearm führt entsprechend bevorzugt beim Rühren von z.B. Fleischstücken zu einem regelmäßigen Wenden des Gargutes. Weiter bevorzugt weist das Rührwerk nur einen radial von einer Rührwerkachse abragenden Hebearm auf. Alternative Lösungen sehen bspw. zwei oder drei derartiger Hebearme vor, die um die Rührwerkachse gleichmäßig verteilt angeordnet sind.

Nachstehend ist die Erfindung anhand der beigefügten Zeichnung, welche lediglich ein Ausführungsbeispiel darstellt, näher erläutert. Es zeigt:
- Fig. 1: eine Küchenmaschine der in Rede stehenden Art mit einem in die Maschine eingesetzten Rührgefäß, in Seitenansicht;

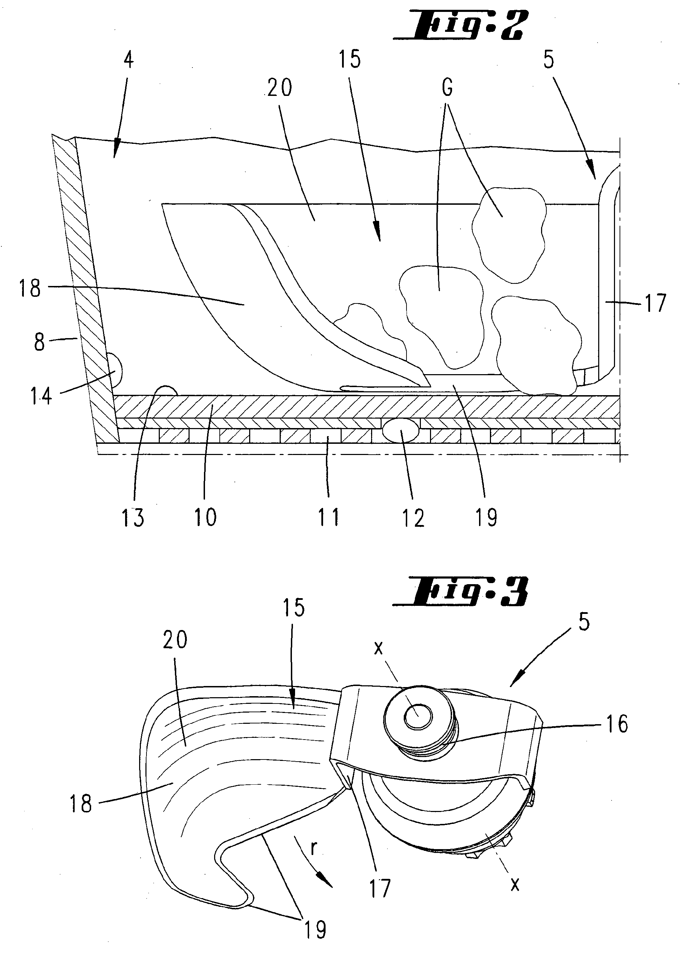

- Fig. 2: eine schematische Schnittdarstellung des Bereiches II in Fig. 1, allein den Rührgefäßbodenbereich betreffend;
- Fig. 3: das Rührwerk des Rührgefäßes in perspektivischer Einzeldarstellung;

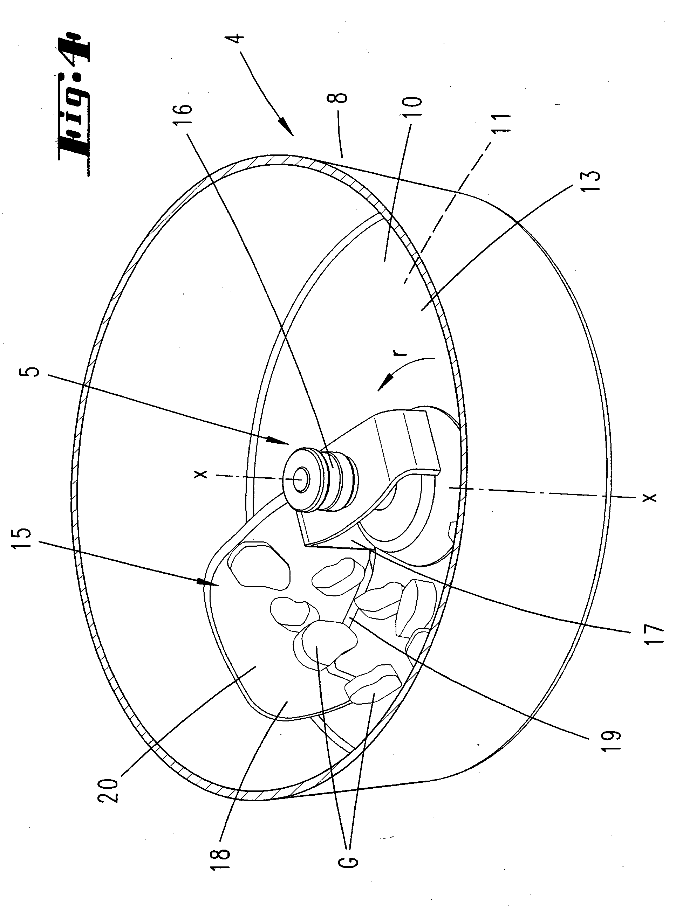

- Fig. 4: in einer perspektivischen Horizontalschnittdarstellung den Bodenbereich des Rührgefäßes mit darin angeordnetem Rührwerk und weiter in dem Rührgefäß angeordneten Gargutstücken;
- Fig. 5: ein Diagramm zur Darstellung variabler Einschaltintervalle des Rührwerks;
- Fig. 6: ein Diagramm zur Darstellung der variablen Einschaltintervalle der Heizung;
- Fig. 7: ein Diagramm zur Darstellung eines Temperaturanstiegs in Abhängigkeit zur Zeit;
- Fig. 8: eine Diagrammzusammenstellung zur Darstellung des Zusammenhangs von erfasster Garguttemperatur, Temperaturanstieg, Verhältnis von Rührzeiten zu Rühr-Pausenzeiten und Heizzeiten zu Heiz-Pausenzeiten, einen ersten Hauptzustand betreffend;
- Fig. 9: eine der Fig. 8 entsprechende Diagrammdarstellung, einen zweiten Hauptzustand betreffend;
- Fig. 10: eine weitere der Fig. 8 entsprechende Darstellung, betreffend einen dritten Hauptzustand;
- Fig. 11: eine weitere der Fig. 8 entsprechende Darstellung, einen vierten Hauptzustand betreffend;
- Fig. 12: ein Diagramm zur Darstellung der Änderung des Verhältnisses von Rührwerkdreh- zu Pausenzeiten in Abhängigkeit von einer gemessenen Gargut-Ist-Temperatur.

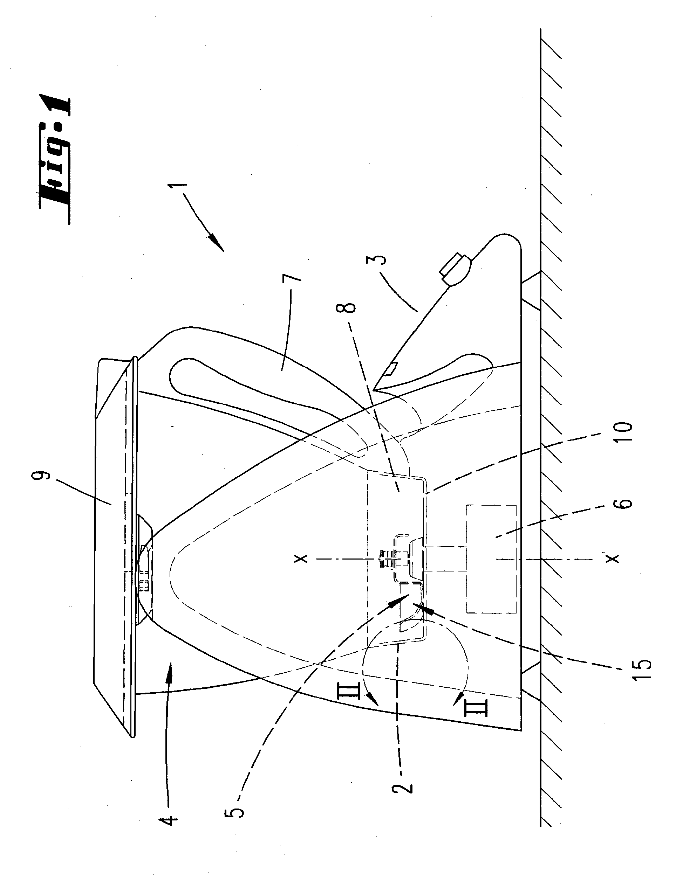

Dargestellt und beschrieben ist zunächst mit Bezug zu Fig. 1 eine Küchenmaschine 1 mit einer Rührgefäßaufnahme 2 und einem Bedienfeld 3.

Der Küchenmaschine 1 ist ein Rührgefäß 4 zuordbar, in dem dieses in die Rührgefäßaufnahme 2 eingesetzt wird. Dem Rührgefäßboden 10 ist zugeordnet ein Rührwerk 5 vorgesehen, welches über einen in der Küchenmaschine 1 unterhalb der Aufnahme 2 angeordneten, lediglich schematisch dargestellten Elektroantrieb 6 betrieben wird.

Das in die Rührgefäßaufnahme 2 einzusetzende Rührgefäß 4 besitzt einen senkrecht ausgerichteten Haltegriff 7. Der Sockelbereich 8 des Rührgefäßes 4 ist topfartig mit kreisrundem Querschnitt ausgebildet und zur Beheizung des Rührgefäßes 4 geeignet bzw. hierzu ausgeformt.

Die mit einem entsprechenden Rührwerk 5 in dem Rührgefäß 4 ausgestattete Küchenmaschine 1 dient in üblicher Weise zum Verrühren, Mixen und/oder Garen von Gargut, wozu weiter das Rührgefäß 4 mittels eines Deckels 9 verschlossen ist.

Über das Bedienfeld 3 ist mittels Schalter und/oder Taster die Rührwerksdrehzahl, darüber hinaus auch die in dem Rührgefäßboden 10 vorgesehene Widerstandsheizung 11 einstellbar.

In dem Rührgefäßboden 10, weiter in unmittelbarer Zuordnung zu der unter dem Gefäßboden 10 angeordneten Widerstandsheizung 11 ist ein Heizflächen-Temperaturfühler 12 vorgesehen. Dieser überwacht die Temperatur der Heizleiterbahnen der Widerstandsheizung 11, aus welcher Temperatur die korrespondierende Temperatur an der Bodenoberfläche 13 über den Zusammenhang der Wärmeleitung berechnet werden kann. Die Messwerte werden über eine nicht dargestellte Leitung an eine maschinenseitige Steuereinheit übertragen.

Mit vertikalem Abstand von wenigen Millimetern, in dem dargestellten Ausführungsbeispiel etwa 5 mm, oberhalb der Bodenfläche 13 des Rührgefäßes 4 ist ein Medien-Temperaturfühler 14 wandungsinnenseitig des Rührgefäßes 4 vorgesehen. Auch dessen Messinformationen werden über eine Leitung an die Auswerteeinheit übermittelt.

Die Lage des Medien-Temperaturfühlers 14 ist oberhalb der Grenzschicht von kritischem Gargut G und außerhalb des direkten Einflusses der Widerstandsheizung 11 gewählt. Dieser Medien-Temperaturfühler 14 dient insbesondere dem Ist-Vergleich der zu erzielenden Gargut-Temperatur und besitzt eine hinreichende Messgenauigkeit.

Sowohl der Heizflächen-Temperaturfühler 12 als auch der Medien-Temperaturfühler 14 sind in dem dargestellten Ausführungsbeispiel lokal begrenzte Temperatursensoren mit PTC- oder NTC-Verhalten.

Alternativ zu der vorgeschlagenen Ausgestaltung des Heizflächen-Temperaturfühlers 12 kann die Temperatur an der Bodenoberfläche 13 auch aus dem Ableitstrom eines Dielektrikums ermittelt werden, welches bspw. zwischen dem, dem aufzuheizenden Gargut zugewandten Heizboden und einer Leiterbahn der Widerstandsheizung 11 angeordnet ist. Über eine vorgesehene Leitung wird der Leckstrom über die weiter vorgesehene Auswerteeinheit der Küchenmaschine 1 zur Steuerung der Heizleistung erfasst.

Die zu den Temperaturfühlern 12 und/oder 14 führenden Leitungen des aus der Küchenmaschine 1 bzw. aus der Rührgefäßaufnahme 2 entnehmbaren Rührgefäßes 4 sind, wie auch die Leitungen zur Spannungsversorgung der Widerstandsheizung über in der Rührgefäßaufnahme 2 vorgesehene, nicht dargestellte Steckkontakte elektrisch kontaktierbar.

Das Rührwerk 5 im Rührgefäß 4 ist in dem dargestellten Ausführungsbeispiel mit einem Hebearm 15 versehen. Dieser erstreckt sich in einer Richtung radial ausgehend von der Rührwerkachse x und weist zunächst einen mit der Rührwerkwelle 16 drehfest verbundenen Vertikalabschnitt 17 auf, der in Richtung auf die Bodenfläche 13 gerichtet verläuft. Dieser Vertikalabschnitt 17 trägt endseitig einen Schaufelabschnitt 18, dessen in Drehrichtung r betrachteter Randbereich entgegen der üblichen, messerartigen Ausgestaltung von Rührwerkzeugen einen Stumpfabschnitt 19 ausformt. Dieser bewegt sich zufolge Drehung des Rührwerkes 5 in einer minimal zu der Bodenfläche 13 beabstandeten Parallelebene, weiter bevorzugt in einem Abstand von 1 mm bis 10 mm. In Drehrichtung r dem Stumpfabschnitt 19 folgend ist der Schaufelabschnitt 18 mit einem Anhebeabschnitt 20 versehen, der sich ausgehend von dem Stumpfabschnitt 19 gleichmäßig, schaufelartig gegenüber der Bodenfläche 13 anhebt und somit entsprechend endseitig einen gegenüber dem Stumpfabschnitt 19 vergrößerten vertikalen Abstand zur Bodenfläche 13 aufweist.

Zufolge der vorbeschriebenen Ausgestaltung des Rührwerkes 5 ist ein Rührwerkzeug geschaffen, dessen Hebearm 15 im Zuge eines Rührens von Gargut G, insbesondere von Gargutstücken, bspw. Fleischstücken, zu einem regelmäßigen Wenden des Garguts führt. Hierbei unterfährt der Stumpfabschnitt 19 des Hebearms 15 das Gargut G zerstörungsfrei, woraufhin zufolge entsprechender Drehung des Hebearms 15 das Gargut G über den Anhebeabschnitt 20 von der Bodenfläche 13 angehoben wird und bevorzugt zufolge Abstützung bzw. Nachrücken folgender Gargutstücke über den in Drehrichtung r endseitigen Rand des Anhebeabschnittes 20 unter Wenden des Gargutstückes abgeworfen wird.

Um insbesondere eine unerwünschte Veränderung der Konsistenz des Garguts G durch zu intensives Rühren und/oder zu intensiver Beheizung entgegenzuwirken, ist eine selbsttätige Steuerung des Rührwerks 5 und/oder der Widerstandsheizung 11 vorgesehen.

Während des Kochens von Gargut G mit stückigen Bestandteilen, die erhalten bleiben sollen, wird durch eine Reduktion der mechanischen Bewegungsenergie die Relativbewegung des betreffenden Garguts G zueinander und zur umgebenden Gefäßwandung sowie zum rotierenden Rührwerk 5 minimiert. Die Bewegung geschieht hierbei bedarfsgesteuert selbsttätig bevorzugt aus den aus der Temperaturregelung gewonnenen Kenndaten. Ein gelegentliches Rühren empfindet hierbei das manuelle Umrühren bei der konventionellen Kochmethode nach.

Das Verhältnis von Rührzeiten zu Rührpausenzeiten steht hierbei bevorzugt in einem variablen Verhältnis, wobei als Eingangsgrößen für das Verhältnis und die absolute Dauer der Rührzeit bevorzugt folgende Parameter einzeln oder in Kombination berücksichtigt werden:
- der Motorstrom des Rührwerkantriebs 6 als Kenngröße für das Antriebsmoment;
- der Ist-Temperaturwert der Heizungsregelung über den Medien-Temperaturfühler 14 als aktuelle Medientemperatur;
- der aktuelle Temperaturanstieg;
- das Signal des Heizflächen-Temperaturfühlers 12, welches ggf. den Zustand eines Anbrennens anzeigt.

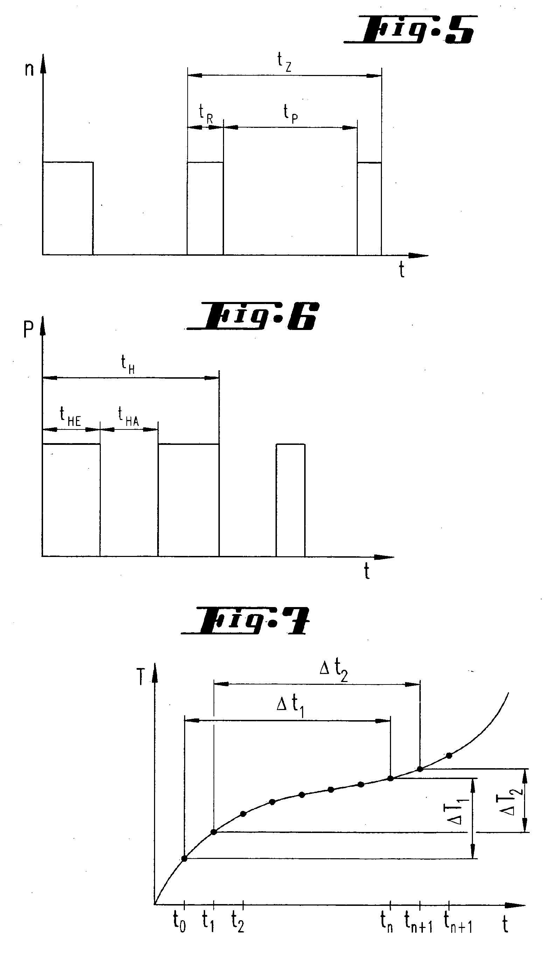

Für das gelegentliche Umrühren kann die Rührzeit t_{R}, die Rührpausenzeit t_{P} zwischen zwei aufeinanderfolgenden Rührereignissen, die Zykluszeit tz als Summe von Rührzeit und Rührpausenzeit, sowie das Einschaltverhältnis C=t_{R}/t_{Z} definiert werden (vgl. Fig. 5).

Bevorzugt sind diesbezüglich Verhältnisse C von 5% bis 100%. Die Dauer eines Zyklus tz liegt bevorzugt innerhalb eines Zeitfensters von 30 Sekunden bis 300 Sekunden. Die Vorgabe für diese Parameter ist hierbei bevorzugt abhängig von den Zustandsgrößen der Heizungsregelung und der Veränderung des Aufnahmestroms des Rührwerk-Elektroantriebs 6 als Maß für die Änderung des Motordrehmoments.

Die Einstellung der mittleren Heizleistung geschieht bevorzugt über ein stetes Ein- und Ausschalten der Heizung mit der vollen Heizleistung (vgl. Fig. 6). Die Einschaltzeit t_{HE} der Heizung und die Ausschaltzeit t_{HA} der Heizung bilden zusammen einen Heizzyklus t_{H}. Bei maximaler Einschaltzeit t_{HE} ist die Ausschaltzeit t_{HA} gleich Null; die mittlere Heizleistung entspricht der Nennleistung der Heizung. So entspricht bei einer beispielhaften Einschaltzeit t_{HE} von 50% diese der Ausschaltzeit t_{HA}, wobei entsprechend die mittlere Heizleistung 50% der Nennleistung beträgt.

Die Berechnung der Einschaltzeit t_{HE} basiert auf der gemessenen Heizungstemperatur T_{H} an dem Heizflächen-Temperaturfühler 12 und ist das Ergebnis des Heizungsregelungsalgorithmus. Aus der gemessenen Heizungstemperatur T_{H} wird über den Zusammenhang der Wärmeleitung der Heizscheibe und des Wärmeübergangs in das Gargut G die tatsächliche Medientemperatur abgeleitet.

Mit der Temperaturregelung werden die folgenden Zustände verarbeitet:
- aktuelle mittlere Heizleistung aus der Einschaltzeit der Widerstandsheizung 11 und der Nenn-Heizleistung;
- gemessene Ist-Temperatur an der Widerstandsheizung 11;
- Temperaturanstieg T_{Rate} aus der Differenz zwischen aktueller Temperatur und der um die feste Zeit Δt zurückliegend ermittelten Temperatur.

Wie beispielhaft in Fig. 7 dargestellt wird der Temperaturanstieg T_{Rate} durch das Verhältnis von ΔT (Temperaturdifferenz) und Δt (Zeitdifferenz) ermittelt, wobei Werte für Δt bevorzugt zwischen 1 Sekunde und 30 Sekunden liegen.

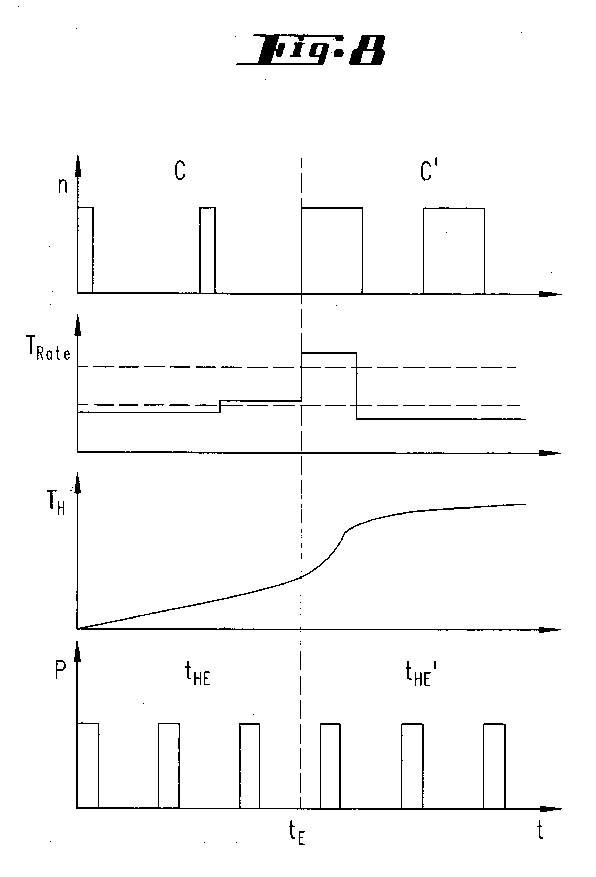

Aus der Einschaltzeit t_{HE} der Widerstandsheizung 11 und dem Temperaturanstieg T_{Rate} lassen sich die anhand der Figuren 8 bis 11 dargestellten vier Hauptzustände ableiten.

So zeigt die Diagrammzusammenstellung in Fig. 8 den Zusammenhang in einem ersten Hauptzustand. Bei geringer Einschaltzeit t_{HE} der Heizung und gleichzeitig hohem Temperaturanstieg T_{Rate} (hier T_{Rate}>14 K/min) zu einem vorgegebenen Zeitpunkt t_{E} deutet dies auf ein Gargut G hin, dass zum Anbrennen neigt. Der schlechte Wärmeübergang zwischen der Heizung und dem Gargut G führt zu einer Temperaturerhöhung T_{H} an der Heizung, die von dem Heizflächen-Temperaturfühler 12 an der Widerstandsheizung 11 erfasst wird. Als Reaktion hierauf wird das Verhältnis C von Rührzeit zu Rührpausenzeit beispielhaft nach C' erhöht. Die Einschaltzeit t_{HE} der Widerstandsheizung 11 wird zunächst nicht weiter reduziert, so dass die Einschaltzeit t_{HE}' auch nach dem vorgegebenen Zeitpunkt t_{E} weiter dem Einschaltwert t_{HE} entspricht.

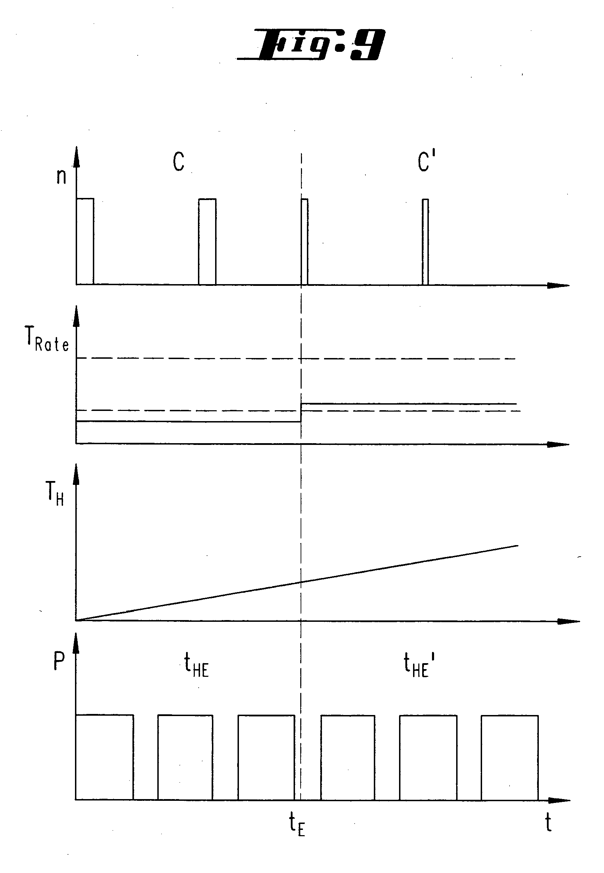

Fig. 9 zeigt einen zweiten Hauptzustand, bei welchem bei hoher Einschaltzeit t_{HE} der Heizung und gleichzeitig niedrigem Temperaturanstieg T_{Rate} (hier zu einem Zeitpunkt t_{E} Temperaturanstieg von < 8 K/min) kein kritischer Zustand besteht. Das Verhältnis C wird beispielhaft auf einen Wert C' reduziert. Die Einschaltzeit t_{HE} der Heizung 11 befindet sich bereits auf hohem Niveau und wird in dem dargestellten Beispiel beibehalten, womit t_{HE}' dem Einschaltzeitwert t_{HE} vor dem Zeitpunkt t_{E} entspricht.

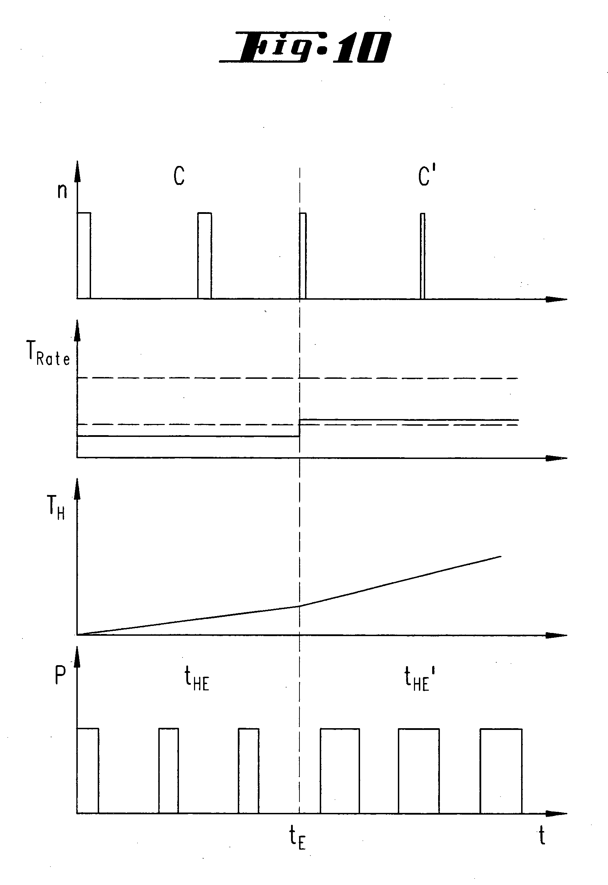

Bei geringer Einschaltzeit t_{HE} der Heizung und gleichzeitig geringem Temperaturanstieg T_{Rate} (vgl. Fig. 10; zum Zeitpunkt t_{E} Temperaturanstieg < 8 K/ min) besteht kein kritischer Zustand. Das Verhältnis C wird beispielhaft zu C' reduziert. Die Einschaltzeit t_{HE} befindet sich auf geringem Niveau und wird in dem dargestellten Beispiel auf t_{HE}' erhöht.

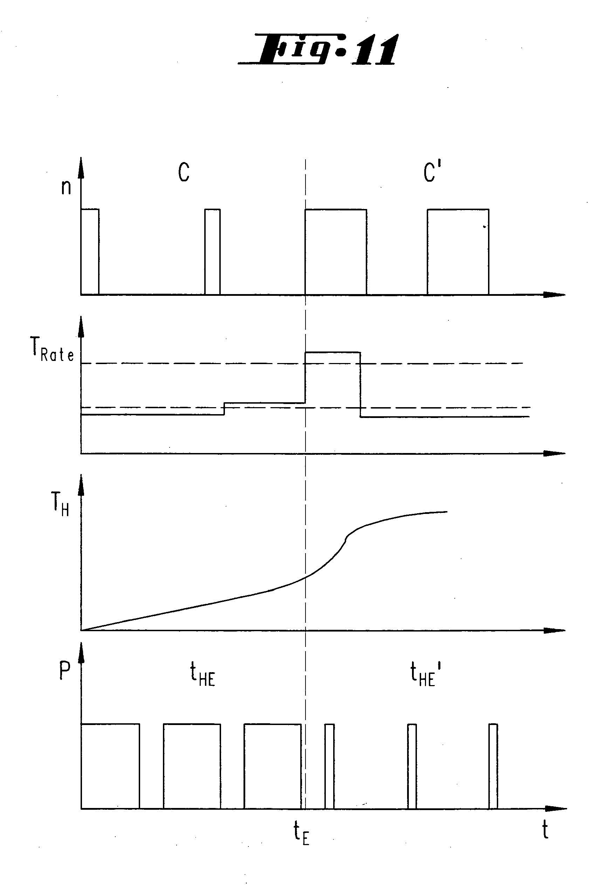

Gemäß Fig. 11 deutet mit Bezug auf einen vierten Hauptzustand eine hohe Einschaltzeit t_{HE} der Heizung und ein gleichzeitig hoher Temperaturanstieg T_{Rate} (zu einem Zeitpunkt t_{E} ein Temperaturanstieg von > 14 K/min) auf ein Gargut G hin, das zum Anbrennen neigt. Der schlechte Wärmeübergang zwischen Heizung und Gargut G führt zu einer Temperaturerhöhung T_{H} an der Heizung, die von dem Heizflächen-Temperaturfühler 12 erfasst wird. Als Reaktion auf die Erhöhung des Temperaturanstieges T_{Rate} wird das Verhältnis C beispielhaft auf C' erhöht und die Einschaltzeit t_{HE} der Heizung idealerweise gleichzeitig von t_{HE} zu t_{HE}' reduziert.

Als zusätzliche Kenngröße dient die aktuelle Ist-Temperatur des Garguts G. Generell ist insbesondere der Temperaturbereich oberhalb von 70°C kritisch, ab dem z.B. Stärke verkleistert und damit den Wärmeübergang verschlechtert. In diesem Temperaturbereich kann die Erhöhung des Verhältnisses C verstärkt werden, um den Wärmeübergang zu verbessern.

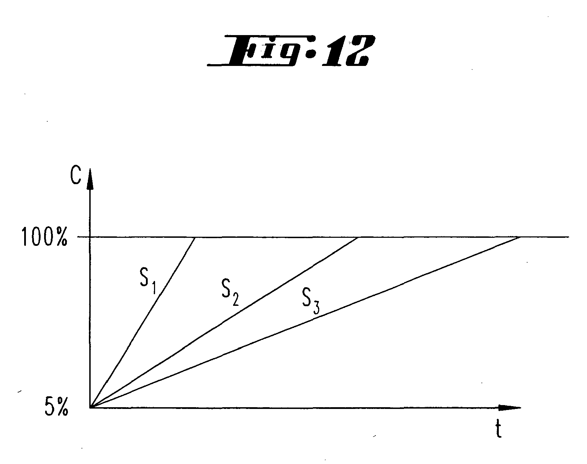

Die Änderung des Verhältnisses C erfolgt bevorzugt mit verschiedenen Steigungen (vgl. in Fig. 12 die Steigungen S₁ bis S₃).

Die Änderungsgeschwindigkeit einer Erhöhung des Verhältnisses C erfolgt weiter bevorzugt ebenfalls in Abhängigkeit der Medienviskosität. Die Viskosität wird als relative Viskositätsänderung aus dem Motorstrom des Rührwerkantriebs 6 ermittelt. So kann hierüber bspw. die Zugabe von Mehl, Stärke oder anderer das Gargut G andickender Medien erkannt werden. Bei entsprechender Viskositätsänderung kann der Anstieg des Rührwerk-Einschaltverhältnisses C - mit Bezug auf die Darstellung in Fig. 12 - bspw. von S₃ auf S₁ beschleunigt werden.

Es erfolgt eine Erhöhung des Verhältnisses C, bis der Temperaturanstieg T_{Rate} (ggf. bei gleichzeitiger Reduktion der Einschaltzeit t_{HE} der Heizung) unkritische Werte von ca. 11 K/min erreicht.

Die Erhöhung des Verhältnisses C kann bei einem kritischen Temperaturanstieg T_{Rate} von mehr als 14 K/min auch direkt auf bis zu 100% erfolgen, bis (ggf. bei gleichzeitiger Reduktion der Einschaltzeit t_{HE} der Heizung) wieder unkritische Werte für T_{Rate} erzielt werden.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

## Patentansprüche

1. Küchenmaschine (1) mit einem Rührgefäß (4) und einem Antrieb (6) für ein Rührwerk (5) in dem Rührgefäß (4), wobei das Rührgefäß (4) in seinem unteren Bereich aufheizbar ist, **dadurch gekennzeichnet, dass** das Rührwerk (5) mit einem Hebearm (15) versehen ist, der einen in Drehrichtung (r) vorderen Stumpfabschnitt (19) aufweist zum hebenden Unterfahren bspw. eines Fleischstückes und dass weiter ein Anhebeabschnitt (20) an dem Hebearm (15) vorgesehen ist, der sich, ausgehend von dem Stumpfabschnitt (19) gleichmäßig, schaufelartig gegenüber der Bodenfläche (13) anhebt und somit entsprechend endseitig einen gegenüber dem Stumpfabschnitt (19) vergrößerten vertikalen Abstand zur Bodenfläche (13) aufweist, dass der Hebearm (15) einen mit der Rührwerkwelle (16) drehfest verbundenen Vertikalabschnitt (17) aufweist, der in Richtung der Bodenfläche (13) gerichtet verläuft und dass der Vertikalabschnitt (17) endseitig einen Schaufelabschnitt (18) trägt, dessen in Drehrichtung (r) betrachteter Randbereich den Stumpfabschnitt (19) ausbildet.

2. Küchenmaschine nach Anspruch 1, **dadurch gekennzeichnet, dass** das Rührwerk nur einen radial von der Rührwerksachse abragenden Hebearm aufweist.

## Claims

1. Kitchen appliance (1) comprising a mixing vessel (4) and a drive (6) for a mixing unit (5) in the mixing vessel (4), the mixing vessel (4) being heatable in its lower region, **characterised in that** the mixing unit (5) is provided with a lifting arm (15) having a blunt portion (19) which leads in the direction of rotation (r) and is intended to pass below for example a piece of meat so as to lift said piece of meat, and **in that** a rising portion (20) is also provided on the lifting arm (15), which rising portion rises up, starting from the blunt portion (19), with respect to the bottom surface (13) in a uniform and scoop-like manner and is thus, at its end, accordingly at a greater vertical distance from the bottom surface (13) than the blunt portion (19), **in that** the lifting arm (15) has a vertical portion (17) which is connected to the mixing unit shaft (16) for conjoint rotation and extends in the direction of the bottom surface (13), and **in that** the vertical portion (17) supports a scoop portion (18) at its end, the edge region of which scoop portion, when viewed in the direction of rotation (r), forms the blunt portion (19).

2. Kitchen appliance according to claim 1, **characterised in that** the mixing unit only has one lifting arm projecting radially from the mixing unit axis.

## Revendications

1. Robot ménager (1) comportant un récipient de malaxage (4) et un entraînement (6) pour un malaxeur (5) dans le récipient de malaxage (4), dans lequel le récipient de malaxage (4) peut être chauffé dans sa zone inférieure, **caractérisé en ce que** le malaxeur (5) est pourvu d'un bras de levage (15) qui comprend une section émoussée (19) en avant dans le sens de rotation (r), pour un mouvement levant sous par exemple un morceau de viande, et **en ce que** une section de soulèvement (20) est prévu sur le bras de levage (15), lequel, se soulève face à la surface inférieure (13) en partant de la section émoussée (19) de manière uniforme, à la manière d'une pelle et présente, par conséquent, une distance correspondante verticale, du côté de l'extrémité face à la section émoussée (19) à la surface inférieure (13), augmentée, **en ce que** le bras de levage (15) présente une section verticale (17) reliée de manière fixe en rotation avec l'arbre du malaxeur (16), qui s'étend de manière orientée en direction de la surface inférieure (13) et **en ce que** la section verticale (17) porte du côté de l'extrémité une section de pelle (18) dont la zone de bordure regardant dans le sens de rotation (r) forme la section émoussée (19).

2. Robot ménager selon la revendication 1, **caractérisé en ce que**, le malaxeur présente seulement un bras de levage draguant radialement par rapport à l'axe du malaxeur.
